# EUROPEAN PATENT APPLICATION

(11) **EP 4 723 772 A1**
(43) Date of publication of application: **08.04.2026**
(21) Application number: 24822204.4
(22) Date of filing: 18.01.2024
(51) Int. Cl.: H04W 72/044

(54) **BEAM SWITCHING METHOD, COMMUNICATION APPARATUS, AND COMPUTER READABLE STORAGE MEDIUM**

(30) Priority: 13.06.2023 CN 202310699433
(71) Applicant: ZTE Corporation, Shenzhen, Guangdong 518057 (CN)
(72) Inventor: LIU, Hanchao, Shenzhen, Guangdong 518057 (CN); XIE, Feng, Shenzhen, Guangdong 518057 (CN); WANG, Fei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/072974
(87) International publication number: WO 2024/255243

(57) **Abstract**

Embodiments of the present disclosure provide a beam switching method, a communication apparatus, and a computer readable storage medium. The beam switching method comprises: receiving a beam switching instruction of a second node, wherein the beam switching instruction is used for instructing a first node to switch a serving beam used for communication to a target beam; in response to the beam switching instruction, switching the serving beam; and sending a beam switching result to the second node, wherein the beam switching result is used for indicating whether the serving beam of the first node is successfully switched.

## Description

This application claims priority of Chinese Patent Application No. 202310699433.X, filed on June 13, 2023, which is incorporated into this application by reference in its entirety.

### TECHNICAL FIELD

The present disclosure relates to the field of communication technologies, and in particular, to a beam switching method, a communication device and a computer readable storage medium.

### BACKGROUND

Massive multi-input multi-output (MIMO) systems are considered as a key technology for improving capacity of next-generation mobile communication networks. The MIMO systems may increase a coverage range of a signal, and enable communication between a first node (e.g., user equipment) and a second node (e.g., a network side device) in a manner supporting a plurality of beams.

In a general case, the first node may select a serving beam from the plurality of beams and perform wireless link detection, time-frequency offset estimation, and other processing based on the serving beam. In some scenarios, the first node needs to switch the serving beam due to its own movement or the current serving beam being blocked.

### SUMMARY

In an aspect, a beam switching method is provided in embodiments of the present disclosure. The beam switching method includes: receiving a beam switching instruction of a second node, the beam switching instruction being used to instruct a first node to switch a serving beam used for communication to a target beam; in response to the beam switching instruction, switching the serving beam; and sending a beam switching result to the second node, the beam switching result being used to indicate whether the serving beam of the first node is successfully switched.

In another aspect, a beam switching method is provided in embodiments of the present disclosure. The beam switching method includes: sending a beam switching instruction to a first node, the beam switching instruction being used to instruct the first node to switch a serving beam used for communication to a target beam; determining whether the serving beam of the first node is successfully switched; and in a case where the serving beam is successfully switched, communicating with the first node through the target beam.

In yet another aspect, a beam switching device is provided in embodiments of the present disclosure. The beam switching device includes a receiving module, a switching module, and a sending module. The receiving module is configured to receive a beam switching instruction of a second node, and the beam switching instruction is used to instruct a first node to switch a serving beam used for communication to a target beam. The switching module is configured to switch the serving beam in response to the beam switching instruction. The sending module is configured to send a beam switching result to the second node, and the beam switching result is used to indicate whether the serving beam of the first node is successfully switched.

In yet another aspect, a beam switching device is provided in embodiments of the present disclosure. The beam switching device includes a sending module, a determination module, and a communication module. The sending module is configured to send a beam switching instruction to a first node, and the beam switching instruction is used to instruct the first node to switch a serving beam used for communication to a target beam. The determination module is configured to determine whether the serving beam of the first node is successfully switched. The communication module is configured to, in a case where the serving beam is successfully switched, communicate with the first node through the target beam.

In yet another aspect, a communication device is provided in embodiments of the present disclosure. The communication device includes: a memory and a processor. The memory and the processor are coupled with each other. The memory is configured to store a computer program. When the processor executes the computer program, the beam switching method described in any one of the aspects described above is implemented.

In yet another aspect, a computer readable storage medium is provided in embodiments of the present disclosure. The computer readable storage medium stores computer program instructions. When the computer program instructions are executed by a processor, the beam switching method described in any one of the aspects described above is implemented.

In yet another aspect, a computer program product is provided in embodiments of the present disclosure. The computer program product includes computer program instructions. When the computer program instructions are executed by a processor, the beam switching method described in any one of the aspects described above is implemented.

### BRIEF DESCRIPTION OF THE DRAWINGS

In order to describe technical solutions in the present disclosure more clearly, the accompanying drawings to be used in some embodiments of the present disclosure will be introduced briefly below. However, the accompanying drawings to be described below are merely accompanying drawings of some embodiments of the present disclosure, and a person of ordinary skill in the art may obtain other drawings according to these drawings.
FIG. 1 is a flow chart of beam switching, in accordance with some technologies in some embodiments of the present disclosure;
FIG. 2 is a schematic diagram of a communication network architecture, in accordance with some embodiments of the present disclosure;
FIG. 3 is a flow chart of a beam switching method, in accordance with some embodiments of the present disclosure;
FIG. 4 is a flow chart of another beam switching method, in accordance with some embodiments of the present disclosure;
FIG. 5 is a flow chart of beam switching, in accordance with some embodiments of the present disclosure;
FIG. 6 is a schematic diagram showing a structure of a beam switching device, in accordance with some embodiments of the present disclosure;
FIG. 7 is a schematic diagram showing a structure of another beam switching device, in accordance with some embodiments of the present disclosure; and
FIG. 8 is a schematic diagram showing a structure of a communication device, in accordance with some embodiments of the present disclosure.

### DETAILED DESCRIPTION

In order to enable those skilled in the art to better understand technical solutions in embodiments of the present disclosure, the technical solutions in the present disclosure will be described clearly and completely with reference to the accompanying drawings in the present disclosure. However, the described embodiments are merely some but not all of embodiments of the present disclosure. All other embodiments obtained based on the embodiments of the present disclosure by a person of ordinary skill in the art without paying any creative effort shall be included in the protection scope of the present disclosure.

It will be noted that, in the present disclosure, the term such as "exemplary/exemplarily" or "for example" is used to represent an example, illustration, or explanation. Any embodiment or design solution described herein with "exemplary/exemplarily" or "for example" in the present disclosure should not be illustrated as being more preferred or advantageous over other embodiments or design solutions. Rather, the use of the term such as "exemplary/exemplarily" or "for example" is intended to present relevant concepts in a specific manner.

Hereinafter, the terms such as "first" and "second" are used for descriptive purposes only and are not to be construed as indicating or implying the relative importance or implicitly indicating the number of indicated technical features. Thus, features defined by "first" or "second" may explicitly or implicitly include one or more of the features.

In the description of the present disclosure, unless otherwise specified, the symbol "/" means "or", for example, "A/B" may mean A or B. Herein, "and/or" is merely an associated relationship for describing associated objects, which means that there may be three relationships. For example, A and/or B may mean: only A, A and B at the same time, and only B. In addition, the phrase "at least one" means one or more, and the phrase "a/the plurality of" means two or more.

In mobile communication systems of some technologies, in order to enhance a coverage range of a network, a first node communicates with a second node in a manner supporting a plurality of beams. The plurality of beams include uplink beams and downlink beams. In other words, the first node and the second node support downlink data transmission based on a plurality of downlink beams, and also support uplink data transmission based on a plurality of uplink beams. The management and process of the plurality of uplink beams are similar to that of the plurality of downlink beams. The following description mainly focuses on the plurality of downlink beams.

In some scenarios, the first node needs to switch the serving beam due to its own movement or the current serving beam being blocked. However, there is a currently problem that the serving beams determined by the first and second nodes are different, which affects the correct demodulation of data transmission and cause a decrease in data transmission rate.

In embodiments of the present disclosure, a network architecture of a mobile communication system (including but not limited to 3G, 4G, 5G and future mobile communication systems) may include a first node and a second node. In some examples, the first node may be a network side device, and the second node may be user equipment (UE). In some other examples, the first node may be the UE, and the second node may be the network side device. In yet some other examples, in a communication scenario from a user side to a user side, both the first node and the second node may be the UE. The embodiments of the present disclosure are not limited thereto.

The description is given below by considering an example in which the first node is the UE and the second node is the network side device.

The network side device may issue synchronization signals, system messages, transmission signaling, or service data through a plurality of beams.

In a general case, the UE may select a beam of the plurality of beams as a serving beam, to communicate with the network side device. For example, the UE may perform wireless link detection and maintenance, time-frequency offset estimation and compensation based on the serving beam. Each beam corresponds to an access resource, and the network side device may determine the serving beam selected by the terminal according to the access resource of the UE. During a process in which the UE accesses the network, the UE may measure the plurality of beams, select an optimal beam as the serving beam, and send a random access request to the network side device by using the access resource corresponding to the beam. The network side device determines the serving beam of the UE according to the access resource selected by the UE, and may then communicate with the UE based on the serving beam.

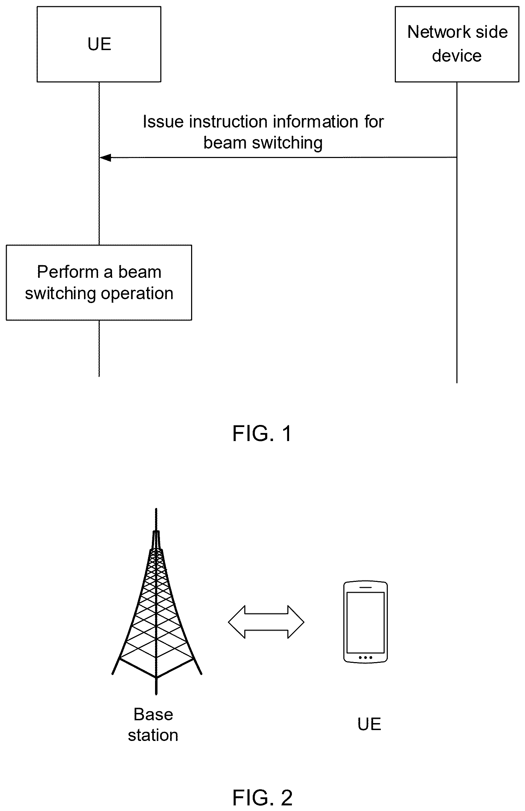

The serving beam of the UE may need to be switched due to the mobility of the UE or other factors. In the related art, the network side device determines the switching of the serving beam of the UE. The network side device may issue measurement resources of a plurality of beams, and the measurement resources are generally physical reference signals, and then the UE measures the plurality of beams and reports measurement results to the network side device. As shown in FIG. 1, the network side device selects a new serving beam for the UE according to the measurement results and issues instruction information to the UE through layer 1 (L1) signaling, layer 2 (L2) signaling, or layer 3 (L3) signaling, so as to instruct the UE to switch the serving beam. The UE switches the serving beam according to the received instruction information.

In the related art, the UE does not notify the network side device of a serving beam switching result. Therefore, the network side device does not know whether the UE has successfully switched the serving beam or when the UE has completed the beam switching. The lack of feedback information may cause the following case: the UE has not completed the serving beam switching, but the network side device mistakenly believes that the UE has completed the serving beam switching and sends information based on a new serving beam, and the UE will still receive information based on the old serving beam, resulting in different beams used by the two communication parties. This case may severely affect the correct demodulation in data transmission between the UE and the network side device, causing a decrease in data transmission rate and, and may cause wireless link failure in severe cases.

On this basis, a beam switching method is provided in the present disclosure. The first node (e.g., the UE) notifies the second node (e.g., the network side device) whether the beam is successfully switched after performing beam switching, so as to ensure that in a case where the beam is successfully switched, both parties communicate with each other through the same switched beam, thereby avoiding the impact on data transmission caused by the two parties using different beams for communication.

FIG. 2 is a schematic diagram showing a structure of a communication system, in accordance with embodiments of the present disclosure, the communication system includes a network side device and a UE. The network side device may be a base station or a core network element. As shown in FIG. 2, the embodiments of the present disclosure are described by considering an example in which the network side device is the base station.

In some embodiments, the base station is used to provide a wireless access service to the UE. For example, a base station provides a service coverage area (also referred to as a cell). The UE entering this area may communicate with the base station through wireless signals, so as to accept the wireless access service provided by the base station. In addition, the service coverage area of the base station may be divided into a near field and a far field. The UE may be located within the near field or within the far field.

In some embodiments, the base station may be an evolution node B (eNB), a next generation node B (gNB), a transmission receiving point (TRP), a transmission point (TP), or some other access nodes. The base station may be classified, according to a size of the provided service coverage area, into a macro base station for providing a macro cell, a micro base station for providing a pico cell, and a femto base station for providing a femto cell. With the continuous evolution of wireless communication technologies, other names for future base stations may be also adopted.

In some embodiments, the UE may be a device with a radio transceiving function, such as a mobile phone, a tablet computer, a wearable device, a vehicle-mounted device, an augmented reality (AR)/virtual reality (VR) device, a notebook computer, an ultra-mobile personal computer (UMPC), a netbook, a personal digital assistant (PDA). The embodiments of the present disclosure do not limit the types of UEs.

It will be understood that FIG. 2 is an exemplary structural diagram, and the number of devices included in the communication system shown in FIG. 2 is not limited. For example, the number of base stations and the number of UEs are not limited. Furthermore, in addition to the devices shown in FIG. 2, the communication system shown in FIG. 2 may further include other devices, which is not limited thereto.

It will be understood that the scenario to which the beam switching method provided in the embodiments of the present disclosure is applied includes but is not limited to: downlink serving beam switching, uplink serving beam switching, and sidelink (SL) serving beam switching.

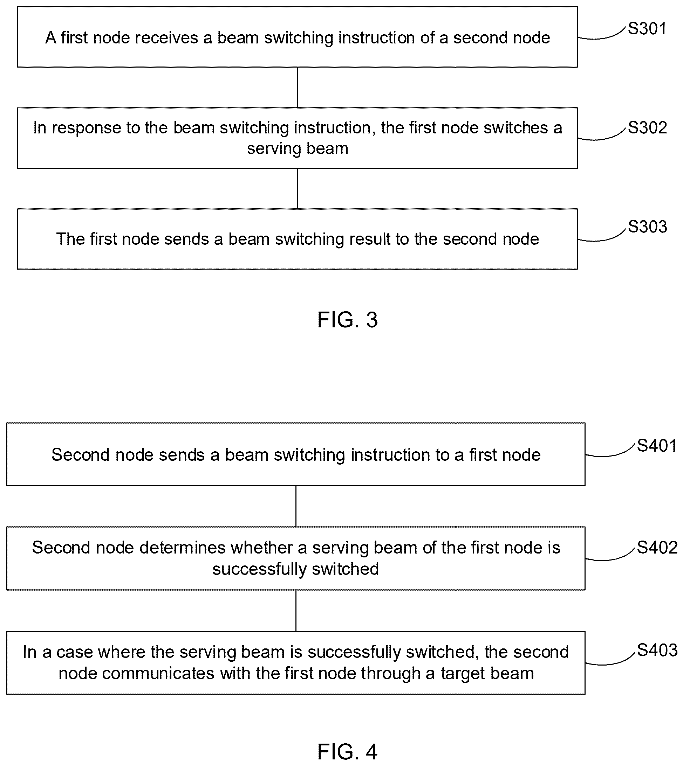

FIG. 3 is a flow chart of a beam switching method, in accordance with embodiments of the present disclosure. For example, the beam method provided in the present disclosure may be applied to the communication system shown in FIG. 2. For example, the method may be applied to the first node, i.e., the UE in FIG. 2.

As shown in FIG. 3, the beam switching method provided in the present disclosure may include, for example, the following S301 to S303.

In S301, a first node receives a beam switching instruction of a second node.

The beam switching instruction is used to instruct the first node to switch a serving beam used for communication to a target beam. The serving beam includes, but is not limited to: a downlink serving beam, an uplink serving beam, and an SL serving beam.

In some embodiments, in a case where the first node moves or the serving beam of the first node is blocked, if the second node detects that the serving beam currently used by the first node is of poor quality, the second node may issue the beam switching instruction to instruct the first node to switch the serving beam to the target beam.

As an example, the beam switching instruction carries an identifier of the target beam or information that indirectly indicates the target beam, so as to indicate the target beam to be switched. For example, the beam switching instruction carries quasi-co-located (QCL) information to indicate the target beam to be switched.

In S302, in response to the beam switching instruction, the first node switches the serving beam.

In some embodiments, in a case where receiving the beam switching instruction of the second node, the first node may respond to the beam switching instruction to switch the serving beam according to the target beam indicated in the beam switching instruction, so as to switch the serving beam to the target beam. For the beam switching process, reference may be made to the related art, and details will not be repeated herein.

In S303, the first node sends a beam switching result to the second node.

The beam switching result is used to indicate whether the serving beam of the first node is successfully switched.

In some embodiments, the first node may feed back the beam switching result to the second node according to whether the beam is successfully switched after the beam switching is performed, so as to notify the second node of the beam switching status of the first node.

In some embodiments, the beam switching result may be carried in control information or a media access control (MAC) control element (CE) for transmission. The control information includes, but is not limited to, uplink control information (UCI) and downlink control information (DCI).

As an example, if the beam is successfully switched, the first node may feed back a beam switching result, including successful switching information, to the second node. The beam switching result including the successful switching information may be used to indicate that the serving beam is successfully switched. Similarly, in a case where the beam switching fails, the first node may feed back a beam switching result that does not include the successful switching information to the second node, so as to indicate to the second node that the first node fails to switch the serving beam.

As another example, in a case where the beam switching is successful, the first node may feed back a beam switching result, including a switching result indication field, to the second node. In a case where a value corresponding to the switching result indication field is a first value (e.g., 1), the beam switching result is used to indicate that the serving beam is successfully switched. Similarly, in a case where the value corresponding to the switching result indication field is a second value (e.g., 0), the beam switching result is used to indicate that the beam switching fails. The second node may detect the value of the switching result indication field in the beam switching result, so as to determine whether the serving beam of the first node is successfully switched.

In some embodiments, after S303, the beam switching method provided in the embodiments of the present disclosure further includes the following S304. In S304, in a case where the serving beam is successfully switched, the first node communicates with the second node through the target beam.

It will be understood that in the related art, if the first node fails to switch, the first node will still communicate based on the original serving beam, while the second node will communicate based on the switched target beam. This will result in different beams used by the two parties, which will affect the demodulation of signals. Therefore, in the present disclosure, the first node will feed back the beam switching status to the second node, so as to ensure that the two parties communicate with each other based on the same beam, which may avoid the problem described above.

FIG. 4 is a flow chart of another beam switching method, in accordance with embodiments of the present disclosure. For example, the beam method provided in the present disclosure may be applied to the communication system shown in FIG. 2. For example, the method may be applied to the second node, i.e., the base station in FIG. 2.

As shown in FIG. 4, the beam switching method provided in the present disclosure may include, for example, the following S401 to S403.

In S401, the second node sends a beam switching instruction to a first node.

The beam switching instruction is used to instruct the first node to switch a serving beam used for communication to a target beam.

In some embodiments, when the serving beam of the first node needs to be switched, the second node may determine the target beam to be switched and then issue the beam switching instruction, so as to instruct the first node to switch the serving beam used for communication to the target beam.

As an example, the first node may measure a plurality of beams between the first node and the second node in a periodic, semi-persistent or aperiodic manner (e.g., according to a preset rule), so as to obtain a measurement result. The measurement result includes the plurality of beams and a reference signal receiving power (RSRP) corresponding to each beam. In some embodiments, the first node may report the measurement result in a periodic, semi-persistent or aperiodic manner. The second node may receive the measurement result and determine, according to the measurement result, whether the serving beam of the first node has qualified signal quality and whether the serving beam needs to be switched. If the second node determines that the RSRP of the serving beam is less than a certain value, the second node determines that the signal quality of the serving beam of the first node is unqualified and the serving beam needs to be switched.

In a case where the second node determines that the serving beam needs to be switched, the second node may determine the target beam to be switched according to the RSRPs of the plurality of beams in the measurement result reported by the first node. For example, the second node may determine a beam with the RSRP greater than a preset threshold as the target beam, or determine a beam with the maximum RSRP as the target beam. Alternatively, the second node may select a target beam from the plurality of beams according to a preset rule without referring to the measurement result, and the embodiments of the present disclosure are not limited thereto.

In S402, the second node determines whether the serving beam of the first node is successfully switched.

In some embodiments, after sending the beam switching instruction, the second node may determine whether the serving beam of the first node is successfully switched according to whether the second node receives feedback from the first node or information fed back by the first node after sending the beam switching instruction, which is described in the following embodiments. The second node determines whether the serving beam of the first node is successfully switched, including determining that the serving beam of the first node is successfully switched and determining that the serving beam of the first node fails to be switched.

In some embodiments, determining that the serving beam of the first node is successfully switched in S402 includes: in a case where the beam switching result of the first node is received within a preset duration after the beam switching instruction is sent, and the beam switching result indicates that the serving beam is successfully switched, determining that the serving beam of the first node is successfully switched.

For example, the second node may initialize and set a timer to start timing after sending the beam switching instruction, and the timing duration is the preset duration. If the second node receives the beam switching result fed back by the first node before the timer times out, and the beam switching result includes information indicating that the beam is successfully switched, the second node may determine that the serving beam of the first node is successfully switched.

In some embodiments, determining that the serving beam of the first node fails to be switched in S402 includes: in a case where the beam switching result of the first node is received within the preset duration after the beam switching instruction is sent, and the beam switching result indicates that the serving beam fails to be switched, determining that the serving beam of the first node fails to be switched; or, in a case where no information fed back by the first node is received within the preset duration after the beam switching instruction is sent, determining that the serving beam of the first node fails to be switched.

For example, the second node may initialize and set a timer to start timing after sending the beam switching instruction, and the timing duration is the preset duration. If the second node receives the beam switching result fed back by the first node before the timer times outs, and the beam switching result does not include information indicating that the beam is successfully switched or includes information indicating that the beam fails to be switched, the second node may determine that the serving beam of the first node fails to be switched. If the second node still does not receive feedback from the first node after the timer times outs, the second node may determine that the serving beam of the first node fails to be switched.

In S403, in a case where the serving beam is successfully switched, the second node communicates with the first node through the target beam.

In some embodiments, in a case where the serving beam of the first node is successfully switched, the second node may communicate with the first node based on the switched serving beam, i.e., the target beam, thereby ensuring that the first node and the second node may communicate with each other by using the same beam.

In some embodiments, after S402, the beam switching method further includes the following S404. It will be understood that S404 and S403 are parallel.

In S404, in a case where the serving beam fails to be switched, the second node retransmits the beam switching instruction.

It may be understood that in a case where the second node determines that the beam switching of the first node fails, it may be that the first node does not receive the beam switching instruction of the second node or the process of performing the beam switching times out. Therefore, the second node may reissue the beam switching instruction after determining that the beam switching fails, so as to instruct the first node to retry the beam switching. For the retransmitted beam switching instruction, the first node may continue to perform S301 to S303, and the second node may continue to perform S401 to S403.

In some embodiments, in a case where the first node fails to switch to the target beam multiple times, for example, the number of switching failures is greater than three, the second node may re-determine a new target beam from a plurality of beam nodes and issue a beam switching instruction to instruct the first node to switch to the new beam for communication.

It may be understood that, in a case where the beam switching fails, the second node may retransmit the beam switching instruction, to instruct the first node to retry the beam switching, which may effectively avoid the impact on the wireless link caused by the blockage of the service process.

In the beam switching method provided in the embodiments of the present disclosure, the first node sends the beam switching result to the second node after receiving the beam switching instruction and performing the beam switching, the second node may determine whether the serving beam of the first node is successfully switched according to the beam switching result, and communicate, in a case where the serving beam is successfully switched, with the first node through the switched beam. This method may ensure that in a case where the beam switching is successful, both parties communicate with each other through the same switched beam, so as to avoid affecting the correct demodulation of data transmission due to the two parties communicating using different beams, thereby effectively improving the data transmission rate.

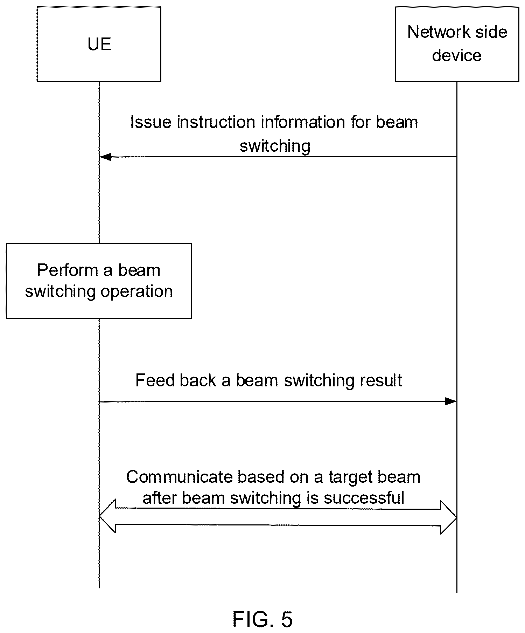

FIG. 5 is a flow chart of the beam switching, in accordance with the embodiments of the present disclosure. As shown in FIG. 5, the network side device issues the beam switching instruction to the UE. In response to the beam switching instruction, the UE performs the serving beam switching, so as to switch the serving beam to the target beam. The UE reports the beam switching result to the network side device after performing the beam switching. In a case where the serving beam is successfully switched, the UE and the network side device communicate with each other through the target beam.

It may be understood that, in order to achieve the functions described above, a beam switching device (e.g., the first node or the second node) includes corresponding hardware structures and/or software modules for performing various functions. Those skilled in the art will easily recognize that the present disclosure may be implemented in the form of hardware or a combination of hardware and computer software, in conjunction with the algorithm steps of various examples described in the embodiments of the present disclosure. Whether a certain function is performed by hardware or computer software-driven hardware depends on the specific application and design constraints of the technical solutions. Professional technicians may use different methods to implement the described functions, for each specific application, but such an implementation should not be considered beyond the scope of the present disclosure.

In the embodiments of the present disclosure, the beam switching device may be divided into functional modules according to the method embodiments described above. For example, each functional module may be divided corresponding to each function, or two or more functions may be integrated into one functional module. The integrated module described above may be implemented in the form of hardware or may be implemented in the form of software. It will be noted that the division of modules in the embodiments of the present disclosure is illustrative, and is merely a kind of logical functional division, and there may be other division methods in actual implementations. The description is given below by considering an example in which each functional module is divided corresponding to each function.

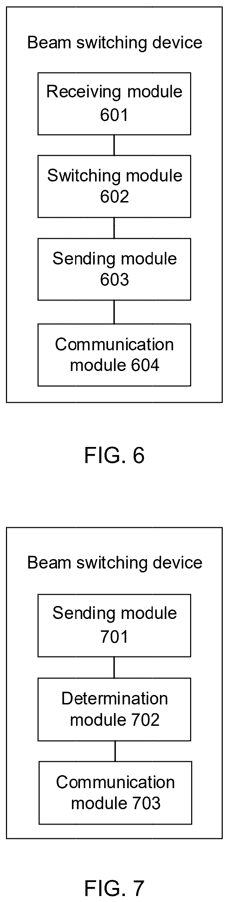

FIG. 6 is a schematic diagram showing a structure of a beam switching device, in accordance with the embodiments of the present disclosure, and the beam switching device may perform the beam switching method provided in the method embodiments described above. As shown in FIG. 6, the beam switching device includes a receiving module 601, a switching module 602 and a sending module 603.

The receiving module 601 is configured to receive a beam switching instruction of a second node. The beam switching instruction is used to instruct a first node to switch a serving beam used for communication to a target beam.

The switching module 602 is configured to switch the serving beam in response to the beam switching instruction.

The sending module 603 is configured to send a beam switching result to the second node.

The beam switching result is configured to indicate whether the serving beam of the first node is successfully switched.

In some embodiments, the beam switching device further includes a communication module 604. The communication module 604 is configured to communicate, in a case where the switching is successful, with the second node through the target beam.

In some embodiments, the beam switching result is carried in control information or an MAC CE.

FIG. 7 is a schematic diagram showing a structure of another beam switching device, in accordance with the embodiments of the present disclosure, and the beam switching device may perform the beam switching method provided in the method embodiments described above. As shown in FIG. 7, the beam switching device includes a sending module 701, a determination module 702 and a communication module 703.

The sending module 701 is configured to send a beam switching instruction to a first node. The beam switching instruction is used to instruct the first node to switch a serving beam used for communication to a target beam.

The determination module 702 is configured to determine whether the serving beam of the first node is successfully switched.

The communication module 703 is configured to communicate, in a case where the serving beam is successfully switched, with the first node through the target beam.

In some embodiments, the determination module 702 is configured to, for example, in a case where a beam switching result of the first node is received within a preset duration after the beam switching instruction is sent, and the beam switching result indicates that the serving beam is successfully switched, determine that the serving beam of the first node is successfully switched.

In some embodiments, the determination module 702 is configured to, for example, in a case where the beam switching result of the first node is received within the preset duration after the beam switching instruction is sent, and the beam switching result indicates that the serving beam fails to be switched, determine that the serving beam of the first node fails to be switched; or, in a case where no information fed back by the first node is received within the preset duration after the beam switching instruction is sent, determine that the serving beam of the first node fails to be switched.

In some embodiments, the sending module 701 is further configured to, in a case where the switching fails, retransmit the beam switching instruction.

In some embodiments, the beam switching result is carried in control information or an MAC CE.

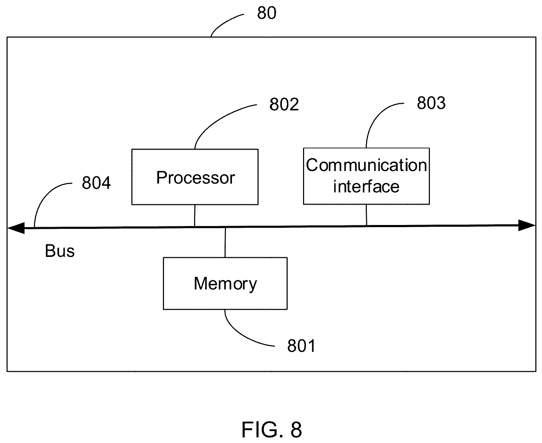

In a case where the functions of the integrated modules described above are implemented in the form of hardware, another possible structure of the communication device involved in the embodiments described above is provided in the embodiments of the present disclosure. As shown in FIG. 8, the communication device 80 includes a processor 802 and a bus 804. In some embodiments, the communication device may further include a memory 801. In some embodiments, the communication device may further include a communication interface 803.

The processor 802 may implement or execute various exemplary logical blocks, modules and circuits described in combination with the embodiments of the present disclosure. The processor 802 may be a central processing unit, a general-purpose processor, a digital signal processor, an application specific integrated circuit, a field programmable gate array or any other programmable logic device, a transistor logic device, a hardware component, or any combination thereof. The processor 802 may implement or execute various exemplary logical blocks, modules and circuits described in combination with the embodiments of the present disclosure. The processor 802 may also be a combination that implements computing functions, for example, a combination of one or more microprocessors, or a combination of a digital signal processor (DSP) and a microprocessor.

The communication interface 803 is used to connect to other devices through a communication network. The communication network may be an Ethernet, a wireless access network, a wireless local area network (WLAN), or the like.

The memory 801 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or any other magnetic disk storage device, or any other medium capable of being used to carry or store desired program codes and capable of being accessed by a computer, where the desired program codes have instructions or are in the form of data structure.

In a possible implementation, the memory 801 may exist independently of the processor 802, and the memory 801 may be connected to the processor 802 through the bus 804 and be used for storing instructions or program codes. When calling and executing the instructions or program codes stored in the memory 801, the processor 802 may achieve the beam switching method provided in the embodiments of the present disclosure.

In another possible implementation, the memory 801 may also be integrated with the processor 802.

The bus 804 may be an extended industry standard architecture (EISA) bus or the like. The bus 804 may be classified as an address bus, a data bus, and a control bus. For ease of representation, only one bold line is used in FIG. 8, but it does not mean that there is only one bus or one type of bus.

A computer readable storage medium (e.g., a non-transitory computer readable storage medium) is further provided in some embodiments of the present disclosure. The computer readable storage medium has stored computer program instructions. When the computer program instructions are executed by a computer, the computer is enabled to perform the beam switching method as described in any one of the embodiments described above.

For example, the computer readable storage medium includes, but is not limited to, a magnetic storage device (e.g., a hard disk, a floppy disk or a magnetic tape), an optical disk (e.g., a compact disk (CD), or a digital versatile disk (DVD)), a smart card and a flash memory device (e.g., an erasable programmable read-only memory (EPROM), a card, a stick or a key driver). The various computer readable storage media described in the present disclosure may represent one or more devices for storing information and/or other machine-readable storage media for storing information. The term "machine-readable storage media" may include, but is not limited to, a wireless channel and various other media capable of storing, containing, and/or carrying instructions and/or data.

A computer program product including instructions is further provided in the embodiments of the present disclosure. When the computer program product is run on a computer, the computer is enabled to perform the beam switching method as described in any one of the embodiments described above.

The above are only specific embodiments of the present disclosure, but the scope of protection of the present disclosure is not limited thereto, and any variations or replacements within the technical scope of the present disclosure shall fall within the protection scope of the present disclosure. Therefore, the protection scope of the present disclosure shall be subject to the protection scope of the claims.

## Claims

1. A beam switching method, applied to a first node, comprising:
receiving a beam switching instruction of a second node; the beam switching instruction being used to instruct the first node to switch a serving beam used for communication to a target beam;
switching, in response to the beam switching instruction, the serving beam; and
sending a beam switching result to the second node; the beam switching result being used to indicate whether the serving beam of the first node is successfully switched.

2. The beam switching method according to claim 1, further comprising:
communicating, in a case where the serving beam is successfully switched, with the second node through the target beam.

3. The beam switching method according to claim 1, wherein the beam switching result is carried in control information or a medium access control (MAC) control element (CE).

4. A beam switching method, applied to a second node, comprising:
sending a beam switching instruction to a first node; the beam switching instruction being used to instruct the first node to switch a serving beam used for communication to a target beam;
determining whether the serving beam of the first node is successfully switched; and
communicating, in a case where the serving beam is successfully switched, with the first node through the target beam.

5. The beam switching method according to claim 4, wherein the determining whether the serving beam of the first node is successfully switched, includes:
determining, in a case where a beam switching result of the first node is received within a preset duration after the beam switching instruction is sent and the beam switching result indicates that the serving beam is successfully switched, that the serving beam of the first node is successfully switched.

6. The beam switching method according to claim 4, wherein the determining whether the serving beam of the first node is successfully switched, includes:
determining, in a case where a beam switching result of the first node is received within a preset duration after the beam switching instruction is sent and the beam switching result indicates that the serving beam fails to be switched, that the serving beam of the first node fails to be switched;
or,
determining, in a case where no information fed back by the first node is received within the preset duration after the beam switching instruction is sent, that the serving beam of the first node fails to be switched.

7. The beam switching method according to any one of claims 4 to 6, further comprising:
retransmitting, in a case where the serving beam fails to be switched, the beam switching instruction.

8. The beam switching method according to claim 5 or 6, wherein the beam switching result is carried in control information or an MAC CE.

9. A communication device, comprising: a processor and a memory for storing instructions executable by the processor;
wherein the processor is configured to execute the instructions to enable the communication device to perform the beam switching method according to any one of claims 1 to 8.

10. A computer readable storage medium, wherein the computer readable storage medium has stored computer instructions that, upon being run on a communication device, enable the communication device to perform the beam switching method according to any one of claims 1 to 8.
